# EUROPÄISCHE PATENTANMELDUNG

(11) **EP 3 836 025 A1**
(43) Veröffentlichungstag der Anmeldung: **16.06.2021**
(21) Anmeldenummer: 19401052.6
(22) Anmeldetag: 10.12.2019
(51) Int. Cl.: G06K 19/077

(54) **TRANSPONDERVORRICHTUNG SOWIE TRANSPONDERANORDNUNG MIT EINER TRANSPONDERVORRICHTUNG**

(71) Anmelder: Smartrac Specialty GmbH, 51580 Reichshof (DE)
(72) Erfinder: Meyer, Frederic, 57339 Erndtebrück (DE); Ohm, Christoph, 57074 Siegen (DE); Friedrich, Ulrich, 74248 Ellhofen (DE)
(74) Vertreter: advotec.

(57) **Zusammenfassung**

Die Erfindung betrifft eine Transpondervorrichtung (35) mit einer auf einem Antennenträger (36) angeordneten, insbesondere als Folienantenne ausgebildeten Antenneneinrichtung (38) wobei die Transpondervorrichtung ein Montagesubstrat (11) aufweist, das zur Befestigung auf einer metallischen Trägerfläche dient, und die Antenneneinrichtung zumindest einen zwischen dem Montagesubstrat und dem Antennenträger angeordneten inneren Antennenbereich (43) und einen gegenüberliegend dem inneren Antennenbereich auf dem Antennenträger angeordnetem äußeren Antennenbereich (40) aufweist, wobei zumindest der äußere Antennenbereich unter einem Winkel α₁ zum Montagesubstrat angeordnet ist.

## Beschreibung

Die vorliegende Erfindung betrifft eine Transpondervorrichtung mit einer auf einem Antennenträger angeordneten, insbesondere als Folienantenne ausgebildeten Antenneneinrichtung, wobei die Transpondervorrichtung ein Montagesubstrat aufweist, das zur Befestigung auf einer metallischen Trägerfläche dient, und die Antenneneinrichtung zumindest einen zwischen dem Montagesubstrat und dem Antennenträger angeordneten inneren Antennenbereich und einen gegenüberliegend dem inneren Antennenbereich auf dem Antennenträger angeordneten äußeren Antennenbereich aufweist. Darüber hinaus betrifft die Erfindung eine Transponderanordnung mit einer derartigen Transpondervorrichtung.

Aus der WO 2018/193309 A1 ist eine Transpondervorrichtung bekannt, mit einem Antennenträger, der zur Anordnung eines Transponders dient, die eine Antenneneinrichtung aufweist, die um den Antennenträger herum angeordnet werden kann. Der Antennenträger ist in einem Gehäuse angeordnet, dessen Unterseite von einem Montagesubstrat gebildet ist, das zur Befestigung der Transpondervorrichtung auf einem Getränke-Stahlfass dient, das zum Transport und zur Lagerung von Bier verwendet wird. Derartige, fachterminologisch auch als Keg bezeichnete Stahlfässer, zeichnen sich durch einen besonderen Aufbau aus, derart, dass eine Stahlblase, die zur Aufnahme des Flüssigkeitsvolumens dient, sowohl auf der Oberseite als auch auf der Unterseite, die jeweils als gewölbter Boden ausgebildet sind, einen umlaufenden Fasskragen aus Stahl aufweist, der jeweils einen Stapelrand ausbildet und darüber hinaus ein auf der Oberseite der Blase mittig angeordnetes Ventil vor mechanischer Beschädigung durch äußere Einflüsse schützt.

Kegs werden im logistischen Umlauf eingesetzt, wobei von diversen Abfüllern befüllte Fässer nach Entleerung im Umlauf unsortiert an die einzelnen Abfüller zurück gelangen, so dass bei dem jeweiligen Abfüller eine Zuordnung und Rücklieferung der Leerfässer zu den Fremdabfüllern erfolgen muss. Hierzu ist zunächst eine sichere Identifikation der Fässer notwendig, die insbesondere dem Umstand Rechnung trägt, dass die Leerfässer regelmäßig in einen engen räumlichen Verbund zum jeweiligen Abfüller gelangen, so dass das zur Identifikation notwendige Auslesen von Transponderdaten, die in an den Fässern angeordneten RFID-Transponder gespeichert sind, sich in der Praxis als schwierig erweist.

Diese Problematik wird noch dadurch erhöht, dass es aufgrund der metallischen Ausgestaltung der Fässer zu Interferenzen in dem zum Auslesen der Transponderdaten benötigten elektromagnetischen Feld kommt, was in der bestehenden Praxis dazu geführt hat, die an einem Stahlfass angeordneten RFID-Transponder möglichst zentral auf dem gewölbten Boden der Blase anzuordnen, so dass insbesondere Beeinflussungen des elektromagnetischen Feldes durch den den gewölbten Boden einfassenden Fasskragen weitestgehend ausgeschlossen werden können.

Als nachteilig an dieser exponierten Anordnung der RFID-Transponder auf der Blase hat sich zudem herausgestellt, dass es häufig zu Beschädigungen an den Transpondern kommt, die zu einem Ausfall führen.

Obwohl sich der Fasskragen offensichtlich zu einer den RFID-Transponder besser schützenden Anordnung im Vergleich zur exponierten Anordnung auf dem Boden der Blase anbietet, konnte sich bislang die Anordnung von RFID-Transpondern an der Innenseite des Fasskragens eines Keg in der Praxis nicht durchsetzen, da bei einer derartigen Anordnung des Transponders ein sicheres Auslesen der Transponderdaten aufgrund der erheblichen Beeinflussung des elektromagnetischen Feldes durch den Fasskragen nicht möglich erschien.

Der vorliegenden Erfindung liegt die Aufgabe zugrunde, eine Transpondervorrichtung bzw. eine Transponderanordnung der Transpondervorrichtung vorzuschlagen, die bei Anordnung auf einer metallischen Oberfläche ein hinreichend sicheres Auslesen der Transponderdaten ermöglicht.

Zur Lösung dieser Aufgabe weist die erfindungsgemäße Vorrichtung die Merkmale des Anspruchs 1 auf.

Erfindungsgemäß ist zumindest der äußere Antennenabschnitt der Antenne unter einem Winkel α₁ zum Montagesubstrat angeordnet.

Der Erfindung liegt die Erkenntnis zugrunde, dass es bei der Anordnung der Antenne auf der metallischen Oberfläche des Fasses zur Ausbildung durchaus gewünschter aber auch parasitärer Kapazitäten aufgrund einer kapazitiven Kopplung insbesondere zwischen dem der metallischen Oberfläche des Fasses zugewandten inneren Antennenbereich und der Fassoberfläche kommt. Dies gilt umso mehr bei einer Anordnung der Antenne an den angewinkelten metallischen Flächen des Fasskragens, so dass es aufgrund der parasitären Kapazitäten zu einer Verstimmung der Resonanzfrequenz der Antenne kommen kann.

Anders als bei einer Anordnung des Transponders auf dem gewölbten Boden der Blase des Metallfasses, also in einem vom Fassrand weitestgehend unbeeinträchtigten Bereich des elektromagnetischen Feldes, wirken sich die parasitären Kapazitäten im Bereich des Fasskragens, der zudem auch Interferenzen im elektromagnetischen Feld verursacht, wesentlich stärker auf die Resonanzfrequenz aus, so dass es als Folge hiervon zu einer unzureichenden Energieversorgung des Transponders über das elektromagnetische Feld kommt und damit das Auslesen des Transponders beeinträchtigt wird.

Wie sich herausgestellt hat, kann durch eine Schrägstellung des äußeren Antennenabschnitts gegenüber dem Montagesubstrat, also durch Einstellung eines Winkels zwischen dem äußeren Antennenabschnitt und dem Montagesubstrat eine zwischen dem inneren Antennenbereich und der Metalloberfläche des Fasses durch kapazitive Kopplung hervorgerufene parasitäre Kapazität ausgeglichen und somit eine Verschiebung des Resonanzpunktes der Antenne erreicht werden. Darüber hinaus hat sich gezeigt, dass gleichzeitig mit der Einstellung des Winkels zwischen dem äußeren Antennenbereich und dem Montagesubstrat auch das Strahlungsverhalten der Antenne positiv beeinflusst werden kann.

Bei der erfindungsgemäßen Transpondervorrichtung wird demnach den parasitären Einflüssen durch die Adaption eines mechanischen Einstellparameters entgegengewirkt.

Vorzugsweise ist eine Einstelleinrichtung zur definierten Einstellung des Winkels vorgesehen, so dass insbesondere durch einen Austausch der Einstelleinrichtung unterschiedliche Winkel, also relative Schrägstellungen des äußeren Antennenbereichs gegenüber dem Montagesubstrat, einstellbar sind.

Besonders bevorzugt ist es, wenn die Einstelleinrichtung durch einen zwischen dem Antennenträger und dem Montagesubstrat angeordneten Einstellkörper gebildet ist, der in einer möglichen Ausführungsform einstückig an dem Antennenträger ausgebildet ist, so dass etwa durch einen Austausch des Einstellkörpers eine Änderung des Winkel erfolgen kann.

Vorzugsweise ist der Einstellkörper als ein unabhängig vom Antennenträger ausgebildetes Bauteil ausgebildet, so dass ein und derselbe Antennenträger unabhängig von dem gewünschten Winkel beibehalten werden kann und die Einstellung eines Winkels durch einen Austausch des Einstellkörpers erfolgen kann. Besonders bevorzugt ist es, wenn der Einstellkörper veränderbar ausgebildet ist, etwa dadurch, dass der Einstellkörper mit einer mechanischen Einstelleinrichtung, wie insbesondere einer Stellschraube, versehen ist.

Bei einer bevorzugten Ausführungsform der Transpondervorrichtung ist zumindest ein Teilabschnitt des inneren Antennenbereichs als Koppelabschnitt zur kapazitiven Kopplung mit einer metallischen Trägerfläche benachbart dem Montagesubstrat angeordnet.

Wenn zumindest ein Teilabschnitt des inneren Antennenbereichs unter einem Winkel α₂ zum Montagesubstrat angeordnet ist, ist eine gezielte Beeinflussung der zwischen einer metallischen Trägerfläche und der Transpondervorrichtung ausgebildeten parasitären Kapazität möglich.

Vorzugsweise ist der Winkel α₂ gleich dem Winkel α₁, so dass in einer besonders einfachen Ausführungsform der Transpondervorrichtung der Antennenträger mit zwei zueinander parallelen Oberflächen zu einer entsprechend parallelen Anordnung des äußeren Antennenbereichs und des inneren Antennenbereichs versehen ist, und zur Einstellung der Winkel lediglich ein keilförmig ausgebildeter Einstellkörper benötigt wird.

Wenn der innere Antennenbereich zwei Teilabschnitte aufweist, die auf zwei einander gegenüberliegenden Oberflächen des Einstellkörpers angeordnet sind, kann der Einstellkörper gleichzeitig einen Teil des Antennenträgers ausbilden.

Vorzugsweise bildet das Montagesubstrat zumindest teilweise eine Gehäuseunterseite eines Gehäuses zur Aufnahme des mit der Antenneneinrichtung versehenen Antennenträgers und des Einstellkörpers aus, so dass eine besonders kompakte und gleichzeitig gegen äußere mechanische Einflüsse geschützte Ausführung der Transpondervorrichtung möglich wird.

Die erfindungsgemäße Transponderanordnung weist eine erfindungsgemäße Transpondervorrichtung auf, wobei das Montagesubstrat auf einer von einer Innenseite eines Fasskragens eines Stahlfasses ausgebildeten metallischen Oberfläche angeordnet ist.

Vorzugsweise ist das Montagesubstrat derart angeordnet, dass eine mit dem äußeren Antennenabschnitt versehene Oberfläche des Antennenträgers unter einem Winkel α₃ zur Innenseite des Fasskragens angeordnet ist.

Vorzugsweise ist der Winkel α₃ gleich dem Winkel α₁, so dass sich das Montagesubstrat in einer im Wesentlichen parallelen Anordnung gegenüber der Innenseite des Fasskragens befindet.

Besonders bevorzugt ist es, wenn der Winkel α₁ in einer durch das Stahlfass verlaufenden vertikalen Ebene ausgebildet ist, derart, dass die Oberfläche des Antennenträgers von einem Kragenrand zu einer Fassblase hin ansteigend angeordnet ist. Hierdurch ist nicht nur ein Ausgleich einer durch den Fasskragen bedingten parasitären Kapazität möglich, sondern darüber hinaus ergibt sich trotz der Anordnung des Antennenträgers am Fasskragen eine für eine effektive Kopplung der Antenne mit einem Lesegerät vorteilhafte Ausrichtung der Antenne.

Ein vorteilhafter Ausgleich parasitärer Kapazitäten lässt sich bereits auch erreichen, wenn der Winkel α₁ in einer durch das Stahlfass verlaufenden vertikalen Ebene ausgebildet ist, derart, dass die Oberfläche des Antennenträgers von einem Kragenrand zu einer Fassblase hin abfallend angeordnet ist.

Nachfolgend werden bevorzugte Ausführungsformen der Erfindung anhand der Zeichnung näher erläutert.

Es zeigen:
- **Fig. 1**: eine Transpondervorrichtung in einer ersten Ausführungs-form;
- **Fig. 2**: eine Transpondervorrichtung in einer zweiten Ausführungs-form;
- **Fig. 3**: eine Transponderanordnung mit einer an einer Innenseite eines Fasskragens angeordneten Transpondervorrichtung in einer dritten Ausführungsform;
- **Fig. 4**: eine Transponderanordnung entsprechend Fig. 3 mit einer Transpondervorrichtung in einer vierten Ausführungsform;
- **Fig. 5**: eine Transponderanordnung entsprechend Fig. 3 mit einer Transpondervorrichtung gemäß einer fünften Ausführungs-form;
- **Fig. 6**: eine Transponderanordnung entsprechend Fig. 3 mit einer Transpondervorrichtung in einer fünften Ausführungsform;
- **Fig. 7**: eine Transponderanordnung entsprechend Fig. 3 mit einer Transpondervorrichtung in einer fünften Ausführungsform.

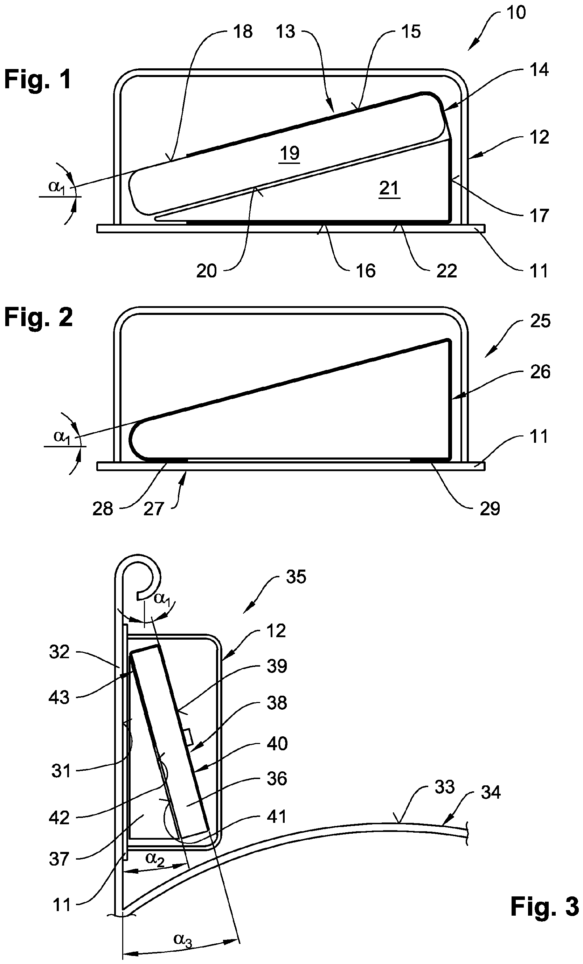

**Fig. 1** zeigt eine Transpondervorrichtung 10 mit einem Montagesubstrat 11, das zur Befestigung der Transpondervorrichtung 10 auf einer im Wesentlichen metallischen Oberfläche dient, wobei die metallische Oberfläche auch mit einer dielektrisch wirkenden Beschichtung versehen sein kann.

Das Montagesubstrat 11 bildet im vorliegenden Fall gleichzeitig den Boden eines Gehäuses 12 aus, das zur Aufnahme eines RFID-Transponders 13 dient, der einen hier nicht näher dargestellten Chip aufweist, der mit einer vorzugsweise als Folienantenne ausgebildeten UHF-Antenneneinrichtung 14 kontaktiert ist. Die Antenneneinrichtung 14 weist einen äußeren Antennenbereich 15 auf, der mit einem inneren Antennenbereich 16 über einen Verbindungsabschnitt 17 verbunden ist. Der äußere Antennenbereich 15 ist auf einer äußeren Oberfläche 18 eines Antennenträgers 19 angeordnet, der mit einer zur äußeren Oberfläche 18 parallelen inneren Oberfläche 20 auf einem keilförmigen Einstellkörper 21 angeordnet ist. Der innere Antennenbereich 16 ist auf einer dem Montagesubstrat 11 zugewandten inneren Oberfläche 22 des Einstellkörpers 21 angeordnet.

Obwohl der Einstellkörper 21 im vorliegenden Fall unabhängig vom Antennenträger 19 ausgebildet ist, übernimmt bei dem dargestellten Ausführungsbeispiel der Einstellkörper 21 mit die Funktion eines Antennenträgers.

Im Gegensatz zu der in **Fig. 1** dargestellten Transpondervorrichtung 10, bei der der innere Antennenbereich 16 sich kontinuierlich über die innere Oberfläche 22 des Einstellkörpers 22 erstreckt, zeigt **Fig. 2** eine Transpondervorrichtung 25, die bei ansonsten gleicher Ausgestaltung wie die Transpondervorrichtung 10 einen zweigeteilten inneren Antennenbereich 27 einer Antenneneinrichtung 26 aufweist, derart, dass die Antenneneinrichtung 26 zum Montagesubstrat 11 hin geöffnet ist mit zwei inneren Teilabschnitten 28, 29 der Antenneneinrichtung 26, die jeweils eine kapazitive Kopplung der Antenneneinrichtung 26 zu einer metallischen Trägerfläche, auf der das Montagesubstrat 11 angeordnet ist, ermöglichen. Als weiteren Unterschied zu der Transpondervorrichtung 10 weist die Transpondervorrichtung 25 einen Antennenträger 23 mit einem zur Einstellung des Winkels α₁ einstückig mit dem Antennenträger 23 ausgebildeten Einstellkörper auf.

**Fig. 3** zeigt eine Transponderanordnung mit einer an einer Innenseite 31 eines metallischen Fasskragens 32 eines im Weiteren nicht dargestellten Stahlfasses oberhalb eines gewölbten Bodens 33 einer Blase 34 des Stahlfasses angeordneten Transpondervorrichtung 35.

Die Transpondervorrichtung 35 weist übereinstimmend mit der in **Fig. 1** dargestellten Transpondervorrichtung 10 ein Gehäuse 12 auf, das einen Antennenträger 36 und einen Einstellkörper 37 aufnimmt.

Auf dem Antennenträger 36 ist eine Antenneneinrichtung 38 angeordnet mit einem auf einer äußeren Oberfläche 39 des Antennenträgers 36 angeordneten äußeren Antennenbereich 40 und einem zwischen einer inneren Oberfläche 41 des Antennenträgers 36 und einer äußeren Oberfläche 42 des Einstellkörpers 37 angeordneten inneren Antennenbereich 43.

Der äußere Antennenbereich 40 der Antenneneinrichtung 38 ist unter einem Winkel α₁ zum Montagesubstrat 11 angeordnet, der dem Winkel α₃ zwischen dem äußeren Antennenbereich 40 und der Innenseite 31 des Fasskragens 32 entspricht.

Weiterhin entspricht ein Winkel α₂ zwischen dem inneren Antennenbereich 43 und dem Montagesubstrat 11 ebenfalls dem Winkel α₁.

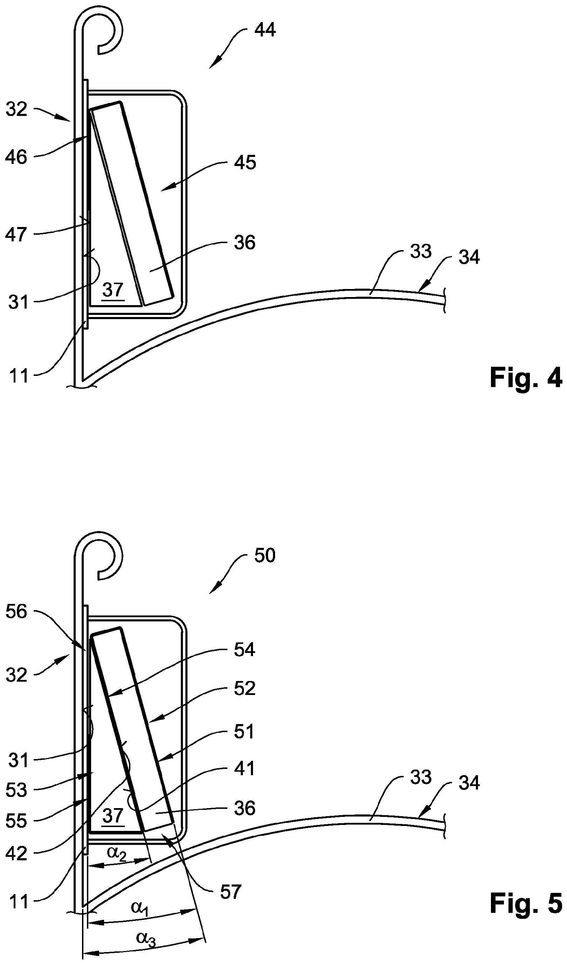

**Fig. 4** zeigt eine Transponderanordnung mit einer Transpondervorrichtung 44, die entsprechend der Transpondervorrichtung 35 an der Innenseite 31 des Fasskragens 32 angeordnet ist und ebenso wie die in **Fig. 3** dargestellte Transpondervorrichtung 35 in einem Gehäuse 12 einen Antennenträger 36 und einen Einstellkörper 37 aufweist. Die Transpondervorrichtung 44 weist eine Antenneneinrichtung 45 auf, die abweichend von der in **Fig. 3** dargestellten Antenneneinrichtung 38 einen inneren Antennenbereich 46 aufweist, der zwischen einer inneren Oberfläche 47 des Einstellkörpers 37 und dem Montagesubstrat 11 angeordnet ist.

**Fig. 5** zeigt eine Transpondervorrichtung 50, die in Übereinstimmung mit den in den **Fig. 3** und **4** dargestellten Transpondervorrichtungen 35 und 44 einen Einstellkörper 37 mit einem darauf angeordneten Antennenträger 36 aufweist, so dass ein äußerer Antennenbereich 51 einer in die Transpondervorrichtung 50 implementierten Antenneneinrichtung 52 ebenfalls unter dem Winkel α₁ gegenüber dem Montagesubstrat 11 bzw. unter dem Winkel α₃ gegenüber der Innenseite 31 des Fasskragens angeordnet ist.

Im Gegensatz zu den Antenneneinrichtungen 38 und 45 der Transpondervorrichtungen 35 und 44 ist ein innerer Antennenbereich 53 der Antenneneinrichtung 52 jedoch so angeordnet, dass er sowohl ein zwischen der äußeren Oberfläche 42 des Einstellkörpers 37 und der inneren Oberfläche 41 des Antennenträgers 36 angeordneten Teilabschnitt 54 als auch einen zwischen der inneren Oberfläche 47 des Einstellkörpers 37 und dem Montagesubstrat 11 angeordneten Teilabschnitt 55 aufweist, so dass lediglich der Teilabschnitt 54 des inneren Antennenbereichs 53 unter einem Winkel α₂ gegenüber dem Montagesubstrat 11 angeordnet ist. Darüber hinaus weist die in **Fig. 5** dargestellte Antenneneinrichtung 52 sowohl eine am Einstellkörper 37 zwischen den Teilabschnitten 54 und 55 ausgebildete erste Antennenöffnung 56 als auch eine am Antennenträger 36 zwischen dem äußeren Antennenbereich 51 und dem ersten Teilabschnitt 54 des inneren Antennenbereichs 53 ausgebildete zweite Antennenöffnung 57 auf.

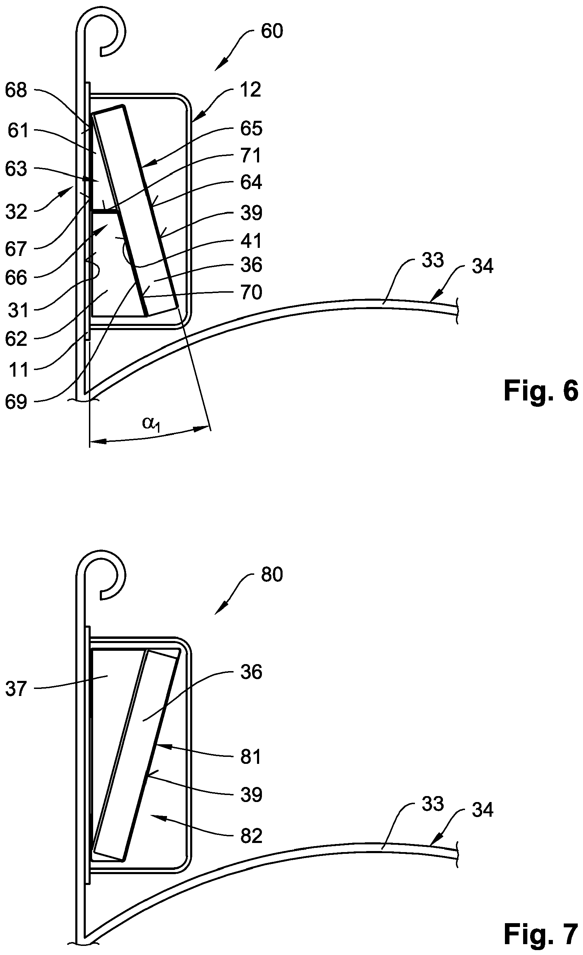

**Fig. 6** zeigt in einer weiteren Ausführungsform eine Transpondervorrichtung 60, die einen mit den in den **Fig. 3**, **4** und **5** dargestellten Transpondervorrichtungen 35, 44 und 50 übereinstimmenden Antennenträger 36 aufweist, wobei die Transpondervorrichtung 60 jedoch einen mit einem ersten Keilabschnitt 61 und einem zweiten Keilabschnitt 62 ausgebildeten Einstellkörper 63 aufweist. Insgesamt ergibt sich aufgrund der Ausgestaltung des Einstellkörpers 63 eine Anordnung eines äußeren Antennenbereichs 64 einer Antenneneinrichtung 65 die der Anordnung der äußeren Antennenbereiche 40 und 51 der Transpondervorrichtungen 35 und 50 entspricht mit einem Winkel α₁ des äußeren Antennenbereichs 64 gegenüber dem Montagesubstrat 11.

Ein innerer Antennenbereich 66 der Antenneneinrichtung 65 ist mit einem ersten Teilabschnitt 67 zwischen einer inneren Oberfläche 68 des ersten Keilabschnitts 61 und dem Montagesubstrat 11 angeordnet. Ein zweiter Teilabschnitt 69 des inneren Antennenbereichs 66 ist zwischen der inneren Oberfläche 41 des Antennenträgers 36 und einer äußeren Oberfläche 70 des zweiten Keilabschnitts 62 des Einstellkörpers 63 angeordnet, wobei der erste Teilabschnitt 67 über einen zwischen dem ersten und zweiten Keilabschnitt 61, 62 ausgebildeten Antennenabsatz 71 mit dem zweiten Teilabschnitt 69 verbunden ist.

Wie **Fig. 6** zeigt, ergibt sich als Folge hieraus, dass lediglich der zweite Teilabschnitt 69 mit einem Winkel α₂ gegenüber dem Montagesubstrat 11 angeordnet ist, und die in **Fig. 6** dargestellte Antenneneinrichtung 65 lediglich eine am Antennenträger 36 ausgebildete Antennenöffnung 72 aufweist.

**Fig. 7** zeigt in einer Ausführungsform eine Transpondervorrichtung 80 mit einem gegenüber den Transpondervorrichtungen 35, 44, 50 und 60 um 180° gedrehten Einstellkörper 37, derart, dass ein auf der äußeren Oberfläche 39 des Antennenträgers angeordneter äußerer Antennenbereich 81 einer Antenneneinrichtung 82 anstatt von der Blase 34 ausgehend gegenüber dem Fasskragen 32 abfallend, wie bei den in den **Fig. 3 bis 7** dargestellten Transponderanordnungen, der äußere Antennenbereich 81 von der Blase 34 ausgehend gegenüber dem Fasskragen 32 ansteigend angeordnet ist.

## Patentansprüche

1. Transpondervorrichtung (25, 35, 44, 50, 60, 80) mit einer auf einem Antennenträger (19, 36) angeordneten, insbesondere als Folienantenne ausgebildeten Antenneneinrichtung (14, 38, 45, 52, 65, 82) wobei die Transpondervorrichtung ein Montagesubstrat (11) aufweist, das zur Befestigung auf einer metallischen Trägerfläche dient, und die Antenneneinrichtung zumindest einen zwischen dem Montagesubstrat und dem Antennenträger angeordneten inneren Antennenbereich (16,43, 46, 66) und einen gegenüberliegend dem inneren Antennenbereich auf dem Antennenträger angeordnetem äußeren Antennenbereich (15, 40, 51, 64, 81) aufweist,
**dadurch gekennzeichnet,**
**dass** zumindest der äußere Antennenbereich unter einem Winkel α₁ zum Montagesubstrat angeordnet ist.

2. Transpondervorrichtung nach Anspruch 1,
**gekennzeichnet durch**
eine Einstelleinrichtung zur definierten Einstellung des Winkels.

3. Transpondervorrichtung nach Anspruch 2,
**dadurch gekennzeichnet,**
**dass** die Einstelleinrichtung durch ein zwischen dem Antennenträger (19, 36) und dem Montagesubstrat (11) angeordneten Einstellkörper (21, 37) gebildet ist.

4. Transpondervorrichtung nach Anspruch 3,
**dadurch gekennzeichnet,**
**dass** der Einstellkörper einstückig an dem Antennenträger ausgebildet ist.

5. Transpondervorichtung nach Anspruch 3,
**dadurch gekennzeichnet,**
**dass** der Einstellkörper (21, 37) als ein unabhängig vom Antennenträger (19, 36) ausgebildetes Bauteil ausgebildet ist.

6. Transpondervorichtung nach einem der Ansprüche 2 bis 5,
**dadurch gekennzeichnet,**
**dass** der Einstellkörper zur Änderung des Winkels veränderbar ist.

7. Transpondervorrichtung nach einem der vorangehenden Ansprüche,
**dadurch gekennzeichnet,**
**dass** zumindest ein Teilabschnitt (55, 67) des inneren Antennenbereichs (53, 66) als Koppelabschnitt zur kapazitiven Kopplung mit einer metallischen Trägerfläche benachbart dem Montagesubstrat (11) angeordnet ist.

8. Transpondervorrichtung nach einem der vorangehenden Ansprüche,
**dadurch gekennzeichnet,**
**dass** zumindest ein Teilabschnitt (54, 69) des inneren Antennenbereichs unter einem Winkel α₂ zum Montagesubstrat (11) angeordnet ist.

9. Transpondervorrichtung nach Anspruch 8,
**dadurch gekennzeichnet,**
**dass** der Winkel α₂ gleich dem Winkel α₁ ist.

10. Transpondervorrichtung nach einem der vorangehenden Ansprüche,
**dadurch gekennzeichnet,**
**dass** der innere Antennenbereich (53) zwei Teilabschnitte (54, 55) aufweist, die auf zwei einander gegenüberliegenden Oberflächen (42, 47) des Einstellkörpers (37) angeordnet sind.

11. Transpondervorrichtung nach einem der vorangehenden Ansprüche,
**dadurch gekennzeichnet,**
**dass** das Montagesubstrat (11) zumindest teilweise eine Gehäuseunterseite eines Gehäuses (12) zur Aufnahme des mit der Antenneneinrichtung versehenen Antennenträgers (19, 36) und des Einstellkörpers (21, 37) ausbildet.

12. Transponderanordnung mit einer Transpondervorrichtung nach einem der Ansprüche 1 bis 11,
**dadurch gekennzeichnet,**
**dass** das Montagesubstrat (11) auf einer von einer Innenseite (31) eines Fasskragens (32) eines Stahlfasses ausgebildeten metallischen Oberfläche angeordnet ist.

13. Transponderanordnung nach Anspruch 12,
**dadurch gekennzeichnet,**
**dass** das Montagesubstrat (11) derart angeordnet ist, dass eine mit dem äußeren Antennenbereich (15, 40, 51, 64, 81) versehene Oberfläche (39) des Antennenträgers (19, 36) unter einem Winkel α₃ zur Innenseite (31) des Fasskragens (32) angeordnet ist.

14. Transponderanordnung nach Anspruch 13,
**dadurch gekennzeichnet,**
**dass** der Winkel α₃ gleich dem Winkel α₁ ist.

15. Transponderanordnung nach Anspruch 13 oder 14,
**dadurch gekennzeichnet,**
**dass** der Winkel α₁ in einer durch das Stahlfass verlaufenden vertikalen Ebene ausgebildet ist, derart, dass die äußere Oberfläche (39) des Antennenträgers (36) von einem Kragenrand des Fasskragens (32) zu einer Fassblase (34) hin ansteigend angeordnet ist.

16. Transponderanordnung nach Anspruch 13 oder 14,
**dadurch gekennzeichnet,**
**dass** der Winkel α₁ in einer durch das Stahlfass verlaufenden vertikalen Ebene ausgebildet ist, derart, dass die äußere Oberfläche (39) des Antennenträgers (36) von einem Kragenrand des Fasskragens (32) zu einer Fassblase (34) hin abfallend angeordnet ist.
